# EUROPÄISCHE PATENTSCHRIFT

(11) **EP 1 185 908 B1**
(45) Veröffentlichungstag und Bekanntmachung des Hinweises auf die Patenterteilung: **06.07.2011**
(21) Anmeldenummer: 00993546.1
(22) Anmeldetag: 13.12.2000
(51) Int. Cl.: G05B 19/042

(54) **SERVICEELEMENT IN VERTEILTEN SYSTEMEN**
SERVICE ELEMENT IN DISTRIBUTED SYSTEMS
ELEMENT DE SERVICE DANS DES SYSTÈMES DISTRIBUÉS

(30) Priorität: 21.12.1999 DE 19961589
(43) Veröffentlichungstag der Anmeldung: 13.03.2002
(73) Patentinhaber: ROBERT BOSCH GMBH, 70442 Stuttgart (DE)
(72) Erfinder: MANN PELZ, Rodolfo, 30175 Hannover (DE); VOGT, Oliver, 30455 Hannover (DE)
(86) Internationale Anmeldenummer: PCT/DE2000/004442
(87) Internationale Veröffentlichungsnummer: WO 2001/046763

(56) Entgegenhaltungen:
- EP-A- 0 434 986
- EP-A- 0 822 473
- EP-A- 0 845 724
- NAOKI URA ET AL: "REMOTE MAINTENANCE FUNCTION FOR DISTRIBUTED CONTROL SYSTEM" ADVANCES IN INSTRUMENTATION AND CONTROL,US,INSTRUMENT SOCIETY OF AMERICA, RESEARCH TRIANGLE PARK, Bd. 48, Nr. PART 03, 1993, Seiten 1557-1564, XP000428426 ISSN: 1054-0032

## Beschreibung

### Stand der Technik

Die Erfindung geht aus von einem Serviceelement in verteilten Systemen nach der Gattung der unabhängigen Patentansprüche.

Es sind bereits verteilte Systeme in verschiedenen Anwendungsbereichen bekannt. So liegen in der Kraftfahrzeugelektronik verteilte Systeme vor, die aus Sensoren, Stellgliedern, Airbags und einer Motorsteuerung bestehen. Weiterhin gibt es verteilte Systeme als Kommunikations- und Informationssysteme im Kraftfahrzeug. Solche Systeme weisen Kombinationen aus Navigationsgeräten, Mobilfunkgeräten, digitalen Hörfunkempfängern, anderen funkbasierten Sendeempfangsstationen wie Bluetooth, Signalverarbeitungseinheiten, Sprach- und Videocodierung sowie -decodierung, Multimediaprozessoren und Klangprozessoren auf.

In der Industrieautomation liegen verteilte Systeme, bestehend aus autonomen Fahrzeugen und Fertigungsstraßen vor. In der Domotik - der Haustechnik - werden verteilte Systeme für intelligente und/oder vernetzte Hausgeräte verwendet.

Aus EP 0 845 724 A1 ist ein verteiltes System aus Regelstationen und einem Computer bekannt, wobei der Computer über eine Kommunikationsstrecke mit den Regelstationen verbunden ist, um diese Regelstationen zu konfigurieren, Parameter zu setzen und Notfallsituationen zu behandeln.

### Vorteile der Erfindung

Das erfindungsgemäße Serviceelement beziehungsweise das erfindungsgemäße verteilte System mit den Merkmalen der unabhängigen Patentansprüche haben demgegenüber den Vorteil, daß das Serviceelement die Fähigkeit hat, Konfigurationen, Aufrüstungen, Wartungen und gegebenenfalls Notfallfunktionen an den Komponenten des verteilten Systems durchzuführen. Damit weist das verteilte System vorteilhafterweise eine automatische Anpassung an neue Gegebenheiten auf. Die Folge ist, daß das verteilte System und damit die Vorrichtung, in der sich das verteilte System befindet, unabhängiger von Werkstattbesuchen beziehungsweise von einem Einsatz eines speziell geschulten Servicetechnikers wird. Dies vereinfacht erheblich den Betrieb von verteilten Systemen, die dadurch ein zusätzliches Maß an Intelligenz gewinnen.

Die Bedienung durch einen Benutzer wird dabei erheblich vereinfacht, so daß eine Schulung der Benutzer auf ein Minimum beschränkt wird. Insbesondere Wartungsaufgaben werden vorteilhafterweise abgeschirmt von dem Benutzer durchgeführt, so daß das verteilte System ein hohes Maß an Unabhängigkeit gewinnt.

Gemäß der Erfindung ist vorgesehen, daß das erfindungsgemäße Serviceelement mittels in dem verteilten System vorhandenen Kommunikationsmittel neue Softwareversionen von laufender Software von einzelnen Komponenten des verteilten Systems lädt und diese zunächst überprüft, um sie dann für die jeweilige Komponente zu konfigurieren. Damit wird die für einen Benutzter arbeitsaufwendige Erneuerung der Software, die häufig in kurzen Abständen erfolgt, abgenommen. Dies führt zu einer erheblichen Arbeitsersparnis.

Durch die in den abhängigen Ansprüchen aufgeführten Maßnahmen und Weiterbildungen sind vorteilhafte Verbesserungen der in den unabhängigen Patentansprüchen angegebenen Servicekomponente bzw. des verteilten Systems möglich.

Besonders vorteilhaft ist, daß das erfindungsgemäße Serviceelement neue Komponenten des verteilten Systems erkennt und diese automatisch in das verteilte System integriert und konfiguriert oder, falls dies nicht möglich ist, einen Benutzer veranlaßt, dies durchzuführen. Dadurch wird vorteilhafterweise die rasche Integration einer neu hinzugefügten Komponente sofort erledigt.

Darüber hinaus ist es von Vorteil, daß das erfindungsgemäße Serviceelement die auf den Komponenten des verteilten Systems laufende Software einer Fehlerdiagnose unterzieht und gegebenenfalls eine Korrektur dieser Software durchführt. Dadurch wird abgeschirmt von dem Benutzer die vorhandene Software auf Fehler überprüft und gegebenenfalls repariert. Dies erspart erheblichen Aufwand für einen Benutzer.

Darüber hinaus ist es von Vorteil, daß das erfindungsgemäße Serviceelement eine Ferndiagnose von fehlerbehafteten Komponenten durch einen Dienstanbieter ermöglicht, falls das Serviceelement selbst eine Korrektur nicht mehr durchführen kann. Damit wird es dem Benutzer vorteilhafterweise abgenommen, bei einem fatalen Fehler einen externen Service zu kontaktieren, um diesen Fehler zu beheben. Dies bedeutet damit eine erhebliche Aufwandsersparnis.

Weiterhin ist es von Vorteil, daß das erfindungsgemäße Serviceelement Informationen über den Zustand des verteilten Systems an einen Benutzer mittels einer Anzeige einer Komponente des verteilten Systems durchführt. Damit wird der Benutzer über den Zustand des verteilten Systems permanent informiert und gegebenenfalls auf Aktionen, die er selbst durchführen muß, hingewiesen.

### Zeichnung

Ausführungsbeispiele der Erfindung sind in der Zeichnung dargestellt und in der Beschreibung näher erläutert. Es zeigen Figur 1 ein verteiltes System mit dem erfindungsgemäßen Serviceelement in der Kraftfahrzeugelektronik, Figur 2 ein verteiltes System mit dem erfindungsgemäßen Serviceelement bei einem Informations- und Unterhaltungssystem in einem Kraftfahrzeug und Figur 3 ein verteiltes System mit dem erfindungsgemäßen Serviceelement in der Haustechnik.

### Beschreibung

### Verteilte Systeme finden in verschiedenen

Anwendungsbereichen der Technik, wie oben dargestellt, immer mehr Verwendung. Dabei weisen diese verteilten Systeme zum Teil keine zentrale Einheit auf, die das verteilte System insgesamt steuert. Das heißt, die einzelnen Komponenten des verteilten Systems sind an sich unabhängig. Damit ist eine Fehlerdiagnose entweder der Komponente selbst überlassen oder ein Benutzer muß entsprechende Maßnahmen durchführen.

Erfindungsgemäß wird daher ein Serviceelement eingesetzt, das eine Konfiguration von Komponenten, Wartungsaufgaben und eine Aufrüstung insbesondere bezüglich neuer Softwareversionen von einzelnen Komponenten und gegebenenfalls auch eine Notfallfunktion automatisch durchführt, ohne daß ein Benutzer eingreifen muß. Das erfindungsgemäße Serviceelement ist dabei eine eigenständige Komponente des verteilten Systems selbst, die entweder über eine eigene Hardware verfügt, also einen eigenen Prozessor, oder auf einem bereits vorhandenen Prozessor parallel zu anderer Software abläuft, falls dieser Prozessor einer anderen Komponente dies ermöglicht. Läuft andere Software auf dem Prozessor, dann wird in bestimmten Zeitabschnitten, die entweder vorgegeben sind oder die sich aus Pausen der parallel ablaufenden Software ergeben, die Software des Serviceelements ablaufen.

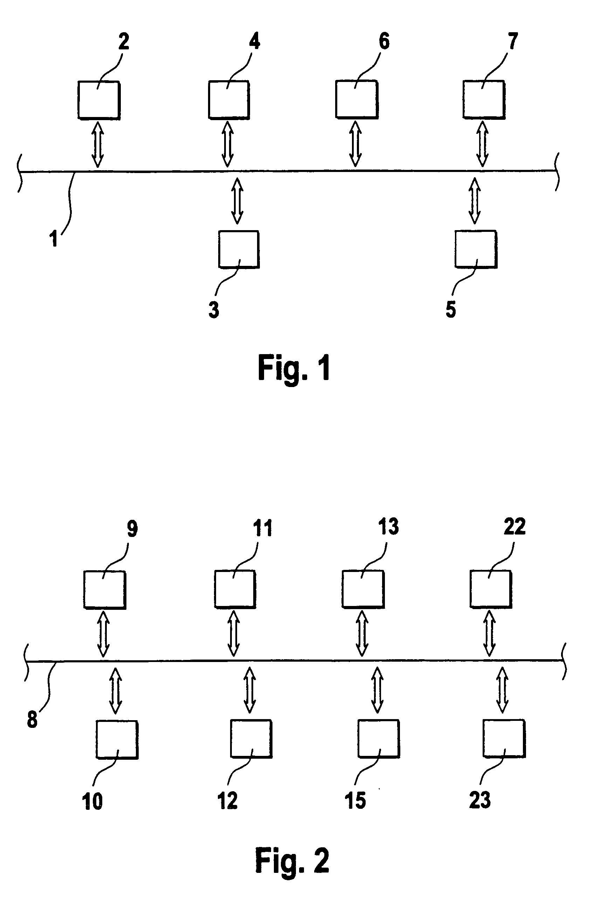

In Figur 1 ist ein verteiltes System mit dem erfindungsgemäßen Serviceelement 2 dargestellt. Das verteilte System liegt hier in der Kraftfahrzeugelektronik vor. Ein Bus 1 verbindet die verschiedenen Komponenten, wobei die einzelnen Komponenten voneinander unabhängig sind.

Der Bus 1 ist hier mittels eines elektrischen Leitungssystems realisiert. Alternativ ist auch ein optisches Leitungssystem möglich, wobei dann die an den Bus angeschlossenen Komponenten Optokoppler aufweisen, um elektrische Signale in optische Signale und umgekehrt umzuwandeln. Eine weitere Alternative stellt ein funkbasierter Bus dar, wobei dann jede über den funkbasierten Bus sendende und/oder empfangende Station eine Sendeempfangsstation aufweist, um Funksignale zu versenden und zu empfangen.

Das Serviceelement 2, ein Speicher 3, Kommunikationsmittel 4, ein Navigationsgerät 5, ein DAB (Digital Audio Broadcasting)-Empfänger 6 und eine Anzeige 7 sind an den Bus 1 jeweils über Datenein/-ausgänge verbunden.

Der Speicher 3 dient zum Abspeichern von Daten für die einzelnen Komponenten, wie zum Beispiel das Navigationsgerät, hierfür insbesondere die Bereitstellung von geographischen Daten und auch zur Zwischenspeicherung von empfangenen Daten, die mittels der Kommunikationsmittel 4 beziehungsweise des DAB-Empfängers 6 empfangen werden. Die Komponenten, die Daten aus dem Speicher 3 benötigen, rufen dies über den Bus 1 von dem Speicher 3 ab. Alle Komponenten, die an den Bus 1 angeschlossen sind, weisen einen Buscontroller auf, um über den Bus 1 kommunizieren zu können.

Die Kommmunikationsmittel 4 sind in einem Kraftfahrzeug Sendeempfangsstationen, die über Funkkanäle kommmunizieren. Dazu gehören insbesondere Mobiltelefone, wie GSM (Global System for Mobile Communications) und/oder UMTS (Universal Mobile Telecommunication System) -Geräte. GSM ist ein weit verbreiteter digitaler zellularer Mobilfunkstandard, der im Zeitmultiplex arbeitet. UMTS ist ein Mobilfunkstandard, bei dem insbesondere Codespreizung verwendet wird. Bei Codespreizung werden zu versendende schmalbandige Signale mit einem breitbandigen Codewort gespreizt, wobei dann viele codegespreizte Signale im gleichen Frequenzbereich gesendet werden, ohne daß eine Querbeeinflussung zwischen den Signalen stattfindet.

Es sind jedoch auch weitere Verfahren zur Funkübertragung hier einsetzbar, wobei die Funkübertragungsverfahren land- und/oder satellitengestützt sein können. Auch eine optische Kommunikation ist hier verwendbar.

Die Kommunikationsmittel 4 bieten einem Benutzer die Möglichkeit, herkömmliche Kommunikationen wie Telefongespräche und Datenübertragungen durchzuführen, sie sind aber insbesondere auch für das Serviceelement 2 von Nutzen, um mittels dieser Kommunikationsmittel 4 neue Softwareversionen für die einzelnen Komponenten des verteilten Systems zu laden.

Weiterhin ermöglicht das Serviceelement 2 mittels der Kommunikationsmittel 4 eine Ferndiagnose von den einzelnen Komponenten durch einen Dienstanbieter. Dieser Dienstanbieter kann dann mittels der Kommunikationsmittel 4 und des Serviceelements 2 direkt die einzelnen Komponenten testen.

Das Serviceelement 2 stellt auch den Kontakt mittels der Kommunikationsmittel 4 zu dem Dienstanbieter her, wenn das Serviceelement 2 selbst einen Fehler nicht mehr beheben kann. Ist dann auch mittels Ferndiagnose des Dienstanbieters die betreffende Komponente nicht mehr zu reparieren, wird der Dienstanbieter mittels der Kommunikationsmittel 4 mit dem Benutzer des verteilten Systems Kontakt aufnehmen, um ihn aufzufordern, eine Reparaturwerkstatt aufzusuchen. Dazu wird die Anzeige 7 und/oder die Kommunikationsmittel 4 verwendet. Alternativ kann die Audiowiedergabe des Autoradios, das den DAB-Empfänger 6 umfaßt, verwendet werden.

Das Navigationsgerät 5 bietet einem Benutzer für ein festgelegtes Ziel eine optimale Route an und leitet ihn dorthin. Dazu verwendet das Navigationsgerät 5 verschiedene Darstellungsmöglichkeiten, die sowohl optisch als auch akustisch sein können. Optische Darstellungsmöglichkeiten bieten eine Pfeildarstellung, eine zweidimensionale Kartendarstellung oder gar eine perspektivische Darstellung einer Szene, durch die das Kraftfahrzeug des Benutzers fährt. Akustisch werden dem Benutzer Hinweise gegeben, in welche Richtung er zu fahren hat.

Der DAB-Empfänger 6 ist ein Empfänger für DAB (Digital Audiobroadcasting)-Signale. DAB ist ein digitales Rundfunkverfahren, wobei neben dem eigentlichen Audioprogramm weitere Dateninformationen mit übertragen werden. DAB ist insbesondere auch für den mobilen Empfänger geeignet, da die Eigenschaften von DAB auf mobilen Empfang ausgelegt sind. Insbesondere durch das Verteilen der Informationen auf viele Trägerfrequenzen, wobei sich die Informationen auf den unterschiedlichen Trägerfrequenzen gegenseitig nicht stören, wird erreicht, daß eine frequenzselektive Dämpfung das ganze Signal nicht so weit abschwächt, daß ein Empfang nicht mehr möglich ist, sondern es wird bei einer frequenzselektiven Dämpfung nur die Information, die auf der Frequenz übertragen wird, die diese starke Dämpfung aufweist, verloren gehen. Man nennt das Verteilen der Signale auf verschiedene Trägerfrequenzen orthogonalen Frequenzmultiplex (engl. OFDM=Orthogonal Frequency Division Multiplex). Mittels fehlerkorrigierender Codes werden Übertragungsfehler korrigiert.

Bei DAB sind verschiedene Übertragungsmoden für Daten möglich. Zum einen ist es möglich, einen Datenstrom zu übertragen, im Englischen mit Stream-Mode bezeichnet. Dieser Mode ist besonders für die Echtzeit-Übertragung von Videosequenzen geeignet, weil die Daten nicht in Blöcken umformatiert werden, sondern als Datenstrom vorliegen.

Zum anderen ist es möglich, Daten in kleinen Blöcken zu übertragen. Hierfür wird das MOT (Multimedia Object Transfer)-Protokoll verwendet. Es gestattet die Aufteilung der Daten in kleine Blöcke, die dann im Empfänger wieder zusammengesetzt werden müssen. Im übrigen werden in einem dritten Mode die Audioprogramme übertragen.

### Neben DAB sind auch andere digitale

Rundfunkübertragungsverfahren wie DVB (Digital Video Broadcasting) und DRM (Digital Radio Mondial) für solch eine Datenübertragung geeignet. Diese Verfahren unterscheiden sich im wesentlichen durch eine unterschiedliche Rahmenstruktur, eine unterschiedliche Bandbreite und einen von DAB unterschiedlichen Sendefrequenzbereich, aber auch hier wird zum Beispiel mit fehlerkorrigierenden Codes und OFDM gearbeitet. Analoge Rundfunkverfahren weisen zuweilen digitale Träger auf, wie zum Beispiel das bekannte Radio Data Signal, die auch zu solch einer Informationsübertragung genutzt werden können.

Die Anzeige 7 dient zur Darstellung von Daten, die der Benutzer anfordert, beispielsweise mittels des DAB-Empfängers 6 oder von dem Navigationsgerät 5, aber die Anzeige 7 wird auch verwendet, um Informationen des Serviceelements 2 dem Benutzer anzuzeigen. Dies kann zum Beispiel die Fehlfunktion oder eine notwendige Konfiguration, die nur manuell durchgeführt werden kann, beinhalten. Die Anzeige 7 kann ein Bildschirm sein; es ist aber auch eine Windscheibenprojektion möglich oder ein Netzhautprojektor. Die Anzeige 7 weist selbst eine Eingabevorrichtung auf, beispielsweise eine berührungssensitive Schicht, oder zumindest einen Anschluß, so daß eine Eingabevorrichtung angeschlossen werden kann. Dies gestattet dem Benutzer die Abfrage und Eingabe von Informationen.

Das Serviceelement 2 überprüft in regelmäßigen Abständen die an den Bus 1 angeschlossenen Komponenten, wozu auch das Serviceelement 2 gehört. Es wird also auch eine Selbstdiagnose durchgeführt. Diese Selbstdiagnose, die mittels Software durchgeführt wird, wird mittels geeigneter Verfahren durchgeführt.

Ein bekanntes Verfahren ist dabei das der Prüfsummen. Es werden CRC (Cyclical Redundancy Check)-Prüfsummen über Codesegmente der Software berechnet und verglichen. Damit kann ein fehlerhafter Code identifiziert werden und falls die restliche Software des Serviceelementes eigenständig dazu in der Lage ist, kann dann eine Reparatur der Software erfolgen, beispielsweise durch das Laden neuer Softwareteile, sogenannter Patches. Bei schwerwiegenden Softwarefehlern des Serviceelementes 2 kann ein Notbetrieb des Serviceelementes 2 die Korrektur sicherstellen. Ein Funktionstest zur Buskommunikation kann mit vorgegebenen Signalen erfolgen, die auf den Bus gesendet werden und auf die von den angeschlossenen Komponenten eine bestimmte, dem Serviceelement 2 bekannte Antwort erwartet wird. Damit kann sichergestellt werden, daß eine Fehlermeldung eines Teilsystems nicht verlohren geht, weil eine Busunterbrechung vorliegt.

Erkennt das Serviceelement 2 einen Fehler, dann kontaktiert das Serviceelement 2 mittels der Kommunikationsmittel 4 einen Dienstanbieter, um eine korrigierte Software zu laden und die betreffende Komponente des verteilten Systems damit zu konfigurieren. Liegt jedoch ein Hardwarefehler vor, gibt das Serviceelement 2 einerseits einem Dienstanbieter eine Nachricht, der dann den Benutzer kontaktiert, so daß die betreffende Komponente ausgetauscht oder repariert wird. Diese Fehlerdiagnose wird in bestimmten Zeitabständen, zum Beispiel an jedem Tag einmal oder jede Woche oder einmal im Monat durchgeführt.

Das Serviceelement 2 fragt in bestimmten Zeitabständen, zum Beispiel ein Mal jeden Monat, einen Dienstanbieter, ob neue Softwareversionen für die einzelnen Komponenten des verteilten Systems vorliegen. Ist das der Fall, fordert das Serviceelement eine solche neue Softwareversion an und lädt sie dann mittels der Kommunikationsmittel 4. Die neue Softwareversion wird mittels Testvektoren auf Fehler überprüft und dann auf der entsprechenden Komponente konfiguriert. Solch eine Aufrüstung wird dann von dem Besucher abgeschirmt automatisch durchgeführt. Ein Dienstanbieter ist der Hersteller der jeweiligen Software oder auch der Komponente. Es kann sich auch um einen Dienstleistungsbetrieb handeln, der die Verteilung der Software und Wartungsaufgaben übernimmt.

Weiterhin weist das Serviceelement 2 alternativ eine zusätzliche Notfallfunktion auf. Dies beinhaltet den Totalausfall des verteilten Systems, oder das Serviceelement 2 weist Sensoren auf, um eine Notfallsituation zu erkennen, zum Beispiel einen Unfall. Solche Sensoren können auch den Benutzer auf seinen Zustand hin überprüfen. Eine Möglichkeit ist eine Videokamera, die aufgenommene Bilder mit im Speicher 3 abgespeicherten Bildern vergleicht, um eine Bildanalyse durchzuführen, so daß im Fall eines Anfalls des Benutzers ein Notruf sofort durch das Serviceelement 2 ausgeführt wird. Darüber hinaus kann alternativ mittels eines Mikrofons, eines Sprachprozessors und eines Speichers eine Stimmenanalyse durchgeführt werden, um eine Zustandsanalyse in Kombination mit einer Videoanalyse oder allein mittels Sprachanalyse durchzuführen.

In Figur 2 ist ein verteiltes System mit einem Serviceelement 15 dargestellt. Das verteilte System umfaßt die Komponenten der Kraftfahrzeugelektronik. Die Komponenten sind wieder über einen Bus 8 verbunden. Zu den Komponenten, die über Datenein/-ausgänge an den Bus 8 angeschlossen sind und Buskontroller aufweisen, gehören Sensoren 9, Stellglieder 10, eine Motorsteuerung 11, ein Airbag 12, eine Fahrererkennung mit Schließsystem 13, eine Anzeige 22 und Kommunikationsmittel 23. Dazu kommt natürlich noch das Serviceelement 15.

Die Funktionalität des Serviceelements 15 ist die gleiche wie die für Figur 1 beschriebene. Die Sensoren 9 umfassen Geschwindigkeitssensoren, Temperatursensoren, um eine Klimaanlage zu steuern und Reifensensoren, um die Fahrdynamik zu beeinflussen. Insbesondere bei den hier aufgeführten Komponenten ist eine leichte Verschlechterung der Funktionsfähigkeit von eminenter Tragweite für die Sicherheit des Kraftfahrzeugs, daher ist hier eine häufige Überprüfung der Komponenten durch das Serviceelement 15 wichtig. Eine Kopplung mit einem Bus, an dem auch Kommunikationsmittel und Anzeige bereits vorhanden sind, wie der in Fig. 1 beschriebene ist von besonderem Nutzen, weil dann für das Serviceelement notwendige Komponenten nur einmal vorhanden sein müssen. Auch das Serviceelement selbst braucht dann nur einmal vorhanden sein.

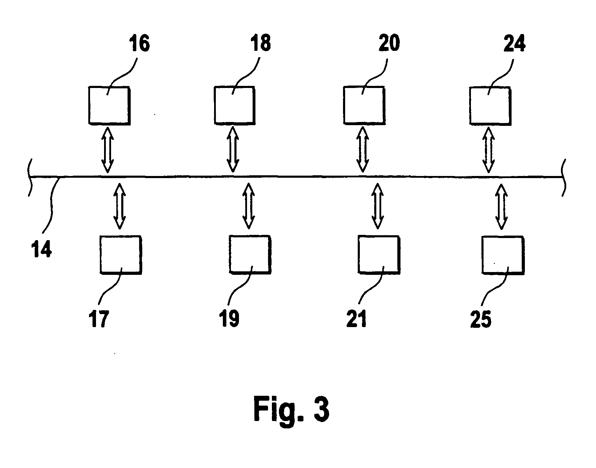

In Figur 3 ist ein weiteres Ausführungsbeispiel für ein verteiltes System mit dem erfindungsgemäßen Serviceelement 16 dargestellt. Hier ist das verteilte System in der Haustechnik implementiert. Wieder sind die Komponenten über einen Bus 14 miteinander verbunden. Neben dem Serviceelement 16 sind eine Heizung 17, eine Klimaanlage 18, eine Beleuchtungsanlage 19, ein Rauchmelder 20, eine Sicherheitsanlage 21, eine Anzeige 24 und Kommunikationsmittel 25 an den Bus 14 angeschlossen. Die Funktionalität des Serviceelements 16 ist wiederum die gleiche wie die in Figur 1 beschriebene. Die Kommunikationsmittel 25 sind hier die Anbindung an ein Telefonfestnetz, aber auch die oben genannten Funkschnittstellen sind möglich. Die Anzeige 24 wird in einem verteilten System für die Haustechnik bereits vorhanden sein, um eine Überwachung und manuelle Einstellung der einzelnen Komponenten zu gestatten. Dazu ist mit der Anzeige 24 eine Eingabevorrichtung verbunden, mittels derer ein Benutzer Eingaben zum Informationsabruf und Konfiguration vornehmen kann.

Weisen die verteilten Systeme keine Kommunikationsmittel auf, wird das Serviceelement nur über eine Anzeige und mittels des Speichers zum einen Fehlermeldungen und zum anderen Softwarereparaturen durchführen können.

## Patentansprüche

1. Verteiltes System mit einem Serviceelement, **dadurch gekennzeichnet, dass** das Serviceelement (2, 15, 16) eine Komponente eines verteilten Systems ist, wobei die Komponenten des verteilten Systems unabhängig voneinander sind und über einen Bus (1, 8, 14) miteinander verbunden sind, und dass das Serviceelement (2,15, 16) andere Komponenten des verteilten Systems konfiguriert, aufrüstet, wartet und gegebenenfalls eine Notfallfunktion ausführt, dass das Serviceelement (2, 15, 16) mittels Kommunikationsmitteln (4, 23, 25) neue Software für die Komponenten von einem Dienstanbieter lädt, wobei das Serviceelement (2, 15, 16) den Dienstanbieter in bestimmten Zeitabständen fragt, ob neue Softwareversionen für die einzelnen Komponenten des verteilten Systems vorliegen.

2. Verteiltes System mit einem Serviceelement nach Anspruch 1, **dadurch gekennzeichnet, dass** das Serviceelement (2, 15, 16) neue Komponenten erkennt und in das System einbindet oder dass das Serviceelement (2, 15, 16) Informationen über eine Konfiguration mittels einer Anzeige (7, 22, 24) darstellt.

3. Verteiltes System mit einem Serviceelement nach Anspruch 2, **dadurch gekennzeichnet, dass** das Serviceelement (2, 15, 16) eine Fehlerdiagnose von Software, die auf den anderen Komponenten läuft, durchführt, und im Falle eines Fehlers eine Softwarekorrektur im Rahmen einer Wartung durchführt.

4. Verteiltes System mit einem Serviceelement nach Anspruch 1, **dadurch gekennzeichnet, dass** das Serviceelement (2, 15, 16) eine Ferndiagnose von Komponenten des verteilten Systems ermöglicht.

5. Verteiltes System mit einem Serviceelement nach Anspruch 4, **dadurch gekennzeichnet, dass** das Serviceelement (2, 3, 15) im Falle eines schwerwiegenden Funktionsfehlers mittels der Kommunikationsmittel (4, 23, 25) den Dienstanbieter kontaktiert.

6. Verteiltes System mit einem Serviceelement nach einem der vorhergehenden Ansprüche, **dadurch gekennzeichnet, dass** das Serviceelement mittels der Anzeige (7, 22, 24) zu einem Benutzer des verteilten Systems, wobei das verteilte System die Anzeige (7, 22, 24) zu dem Benutzer als Komponente aufweist, der ihm Informationen über das verteilte System mitteilt.

7. Verteiltes System mit einem Serviceelement nach einem der vorhergehenden Ansprüche, **dadurch gekennzeichnet, dass** das Serviceelement (2, 15, 16) mittels vorgegebener Werte neu geladene Software überprüft.

## Claims

1. Distributed system having a service element, **characterized in that** the service element (2, 15, 16) is a component of a distributed system, the components of the distributed system being independent of one another and being connected to one another via a bus (1, 8, 14), and **in that** the service element (2, 15, 16) configures, upgrades and maintains other components of the distributed system and performs an emergency function if necessary, **in that** the service element (2, 15, 16) uses communication means (4, 23, 25) to load new software for the components from a service provider, the service element (2, 15, 16) asking the service provider at particular intervals of time whether there are new software versions for the individual components of the distributed system.

2. Distributed system having a service element according to Claim 1, **characterized in that** the service element (2, 15, 16) detects new components and incorporates them into the system, or **in that** the service element (2, 15, 16) displays information relating to configuration using a display (7, 22, 24).

3. Distributed system having a service element according to Claim 2, **characterized in that** the service element (2, 15, 16) carries out fault diagnosis on software running on the other components and corrects the software as part of a maintenance operation in the event of a fault.

4. Distributed system having a service element according to Claim 1, **characterized in that** the service element (2, 15, 16) makes it possible to remotely diagnose components of the distributed system.

5. Distributed system having a service element according to Claim 4, **characterized in that** the service element (2, 3, 15) uses the communication means (4, 23, 25) to contact the service provider in the event of a serious functional fault.

6. Distributed system having a service element according to one of the preceding claims, **characterized in that** the service element uses the display (7, 22, 24) for a user of the distributed system to communicate information relating to the distributed system to the user, the distributed system having the display (7, 22, 24) for the user as a component.

7. Distributed system having a service element according to one of the preceding claims, **characterized in that** the service element (2, 15, 16) uses predefined values to check newly loaded software.

## Revendications

1. Système réparti présentant un élément de service, **caractérisé en ce que**
l'élément de service (2, 15, 16) est un composant d'un système réparti,
**en ce que** les composants du système réparti sont indépendants les uns des autres et sont reliés par un bus (1, 8, 14),
**en ce que** l'élément de service (2, 15, 16) configure, équipe et assure la maintenance d'autres composants du système réparti et exécute éventuellement une fonction de secours,
**en ce qu'**à l'aide de moyens de communication (4, 23, 25), l'élément de service (2, 15, 16) charge en provenance d'un fournisseur de services de nouveaux logiciels pour les composants et
**en ce que** l'élément de service (2, 15, 16) demande à intervalles réguliers au fournisseur de services s'il existe de nouvelles versions des logiciels pour les différents composants du système réparti.

2. Système réparti présentant un élément de service selon la revendication 1, **caractérisé en ce que** l'élément de service (2, 15, 16) détecte de nouveaux composants et les intègre dans le système ou **en ce que** l'élément de service (2, 15, 16) présente au moyen d'un affichage (7, 22, 24) des informations concernant une configuration.

3. Système réparti présentant un élément de service selon la revendication 2, **caractérisé en ce que** l'élément de service (2, 15, 16) exécute un diagnostic des erreurs des logiciels qui tournent sur d'autres composants et en cas d'erreur exécute une correction du logiciel dans le cadre d'une maintenance.

4. Système réparti présentant un élément de service selon la revendication 1, **caractérisé en ce que** l'élément de service (2, 15, 16) permet un diagnostic à distance de composants du système réparti.

5. Système réparti présentant un élément de service selon la revendication 4, **caractérisé en ce qu'**en cas de grave erreur de fonctionnement, l'élément de service (2, 3, 15) contacte le fournisseur de services à l'aide des moyens de communication (4, 23, 25).

6. Système réparti présentant un élément de service selon l'une des revendications précédentes, **caractérisé en ce qu'**au moyen de l'affichage (7, 22, 24), l'élément de service transmet à l'utilisateur du système réparti des informations à propos du système réparti, le système réparti présentant comme composant qui transmet à l'utilisateur du système réparti des informations à propos du système réparti l'affichage (7, 22, 24).

7. Système réparti présentant un élément de service selon l'une des revendications précédentes, **caractérisé en ce que** l'élément de service (2, 15, 16) vérifie à l'aide de valeurs prédéterminées les logiciels nouvellement chargés.
